# FASCICULE DE BREVET EUROPEEN

(11) **EP 2 865 538 B1**
(45) Date de publication et mention de la délivrance du brevet: **16.03.2016**
(21) Numéro de dépôt: 14190315.3
(22) Date de dépôt: 24.10.2014
(51) Int. Cl.: B60B 27/00, B60B 27/06, B60B 35/18, B60K 17/24, F16C 35/04, F16C 35/067

(54) **Palier à roulement à bride surmoulée**
Wälzlager mit hinterspritztem Flansch
Roller bearing with overmoulded flange

(30) Priorité: 25.10.2013 FR 1360437
(43) Date de publication de la demande: 29.04.2015
(73) Titulaire: NTN-SNR Roulements, 74000 Annecy (FR)
(72) Inventeur: Bonnaudet, Aurélien, 74000 Annecy (FR)
(74) Mandataire: Bugnion Genève

(56) Documents cités:
- WO-A1-2010/116207
- US-A- 4 025 135

## Description

### DOMAINE TECHNIQUE DE L'INVENTION

L'invention se rapporte à un palier à roulement, et en particulier à un palier relais, destiné notamment à supporter un arbre de transmission dans une chaîne cinématique de véhicule automobile.

### ETAT DE LA TECHNIQUE ANTERIEURE

Dans le document FR 2 876 630 est décrit un groupe motopropulseur transversal pour un véhicule automobile, du type qui comporte au moins un moteur qui est accouplé à une boîte de transmission qui est susceptible d'entraîner deux roues du véhicule par l'intermédiaire d'un arbre de transmission court et d'un arbre de transmission long s'étendant en partie sous le moteur. Chaque arbre de transmission comporte au moins un demi-arbre amont entraîné par la boîte de transmission et un demi arbre aval entraînant la roue qui sont liés en rotation l'un à l'autre par l'intermédiaire d'un joint homocinétique. Le demi-arbre amont de l'arbre de transmission long est guidé en rotation par l'intermédiaire d'un palier relais qui est fixé à une paroi d'un bloc du moteur par l'intermédiaire d'une chape réalisée en deux parties, par cassure d'une chape monobloc de manière que les deux parties s'ajustent sans jeu l'une à l'autre lors du montage du palier relais dans la chape. Ce type de palier relais comporte de nombreuses pièces et présente une masse importante.

### EXPOSE DE L'INVENTION

L'invention vise à remédier aux inconvénients de l'état de la technique et à proposer un palier à roulement allégé, notamment pour une fonction de palier relais, réduisant le nombre de pièces à assembler sur le véhicule.

Pour ce faire est proposé suivant un premier aspect de l'invention un palier à roulement comportant une bague métallique extérieure de roulement définissant un axe de rotation, et une bride pourvue d'un logement pour la bague extérieure et d'une portée cylindrique ou tronconique de centrage, la bride comportant un corps en matière composite chargée surmoulé sur la bague extérieure et sur un manchon métallique formant la portée cylindrique ou tronconique.

Le palier ainsi constitué se présente comme un ensemble unitaire, limitant les opérations d'assemblage sur le véhicule. Le choix d'une matière composite chargée pour réaliser le corps de la bride permet également de réduire de façon substantielle la masse de l'ensemble. Le manchon métallique permet quant à lui de conserver la rigidité nécessaire pour l'assemblage de la portée cylindrique sur une forme complémentaire d'un support du véhicule.

Suivant un mode de réalisation préféré, la portée cylindrique ou tronconique est tournée radialement vers l'extérieur. De préférence, la portée cylindrique ou tronconique est coaxiale avec l'axe de rotation, et destinée à venir s'emmancher dans un logement prévu à cet effet, par exemple un logement formé sur la paroi d'un carter de boîte de transmission en sortie d'arbre.

De préférence, la bague extérieure comporte des reliefs d'accrochage pour la matière composite surmoulée du corps de la bride, par exemple un moletage sur une face radialement externe de la bague extérieure.

En pratique, le palier à roulement comporte en outre une bague intérieure de roulement et des corps roulants logés entre la bague intérieure et la bague extérieure pour permettre la rotation de la bague intérieure autour de l'axe de rotation.

De préférence, la bride comporte en outre au moins un trou de passage d'une tige de fixation à un support, et en pratique au moins deux trous. Chaque trou est de préférence délimité par une douille, de préférence métallique ou en matériau plus rigide que la matière composite du corps, et surmoulée par le corps en matière composite chargée. Le ou les trous sont de préférence parallèles à l'axe de rotation.

Suivant un autre aspect de l'invention, celle-ci a trait à un dispositif comportant un support, notamment un carter d'un groupe motopropulseur, comportant un ouverture cylindrique ou tronconique, et un palier à roulement selon l'une quelconque des revendications précédentes pour guider un arbre sortant par l'ouverture cylindrique ou tronconique, le manchon métallique du palier à roulement étant engagé dans l'ouverture cylindrique ou tronconique.

Dans la mesure où la bride est pourvue d'un ou plusieurs trous de passage, le dispositif peut comporter une ou plusieurs tiges de fixation traversant le ou les trous de passage et engagée dans autant de trous de fixation prévus dans le support.

On peut prévoir un assemblage ajusté ou un engagement en force du manchon métallique dans l'ouverture cylindrique ou tronconique.

### BREVE DESCRIPTION DES FIGURES

D'autres caractéristiques et avantages de l'invention ressortiront à la lecture de la description qui suit, en référence aux figures annexées, qui illustrent :
- la figure 1, une vue schématique d'un groupe motopropulseur équipé d'un palier relais selon un mode de réalisation de l'invention;
- la figure 2, une coupe du palier relais du groupe motopropulseur de la figure 1.

Pour plus de clarté, les éléments identiques sont repérés par des signes de référence identiques sur l'ensemble des figures.

### DESCRIPTION DÉTAILLÉE D'UN MODE DE REALISATION

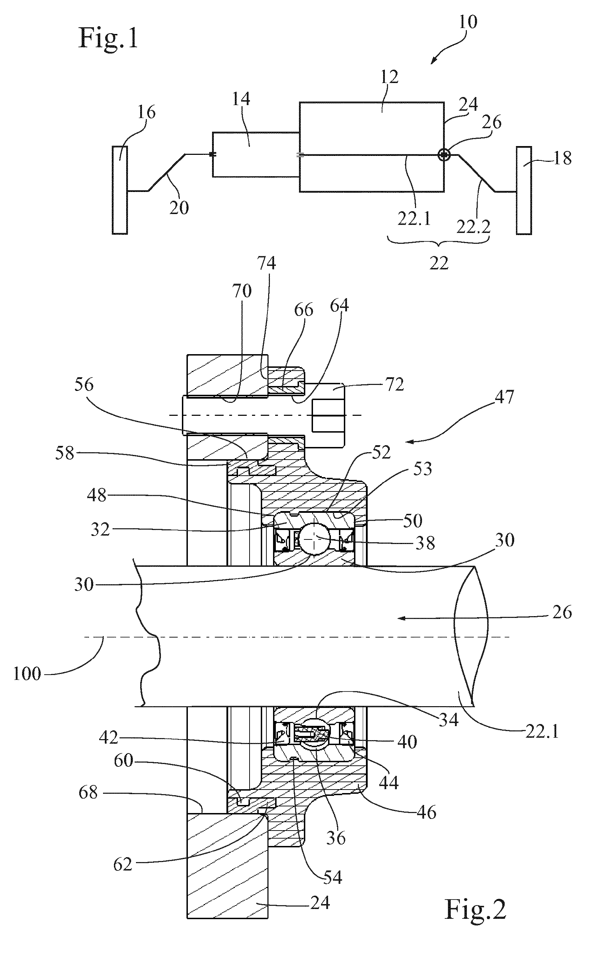

Sur la figure **1** est illustré un groupe motopropulseur transversal **10** pour un véhicule automobile, comportant au moins un moteur **12** qui est accouplé à une boîte de transmission **14** pour entraîner deux roues **16, 18** du véhicule par l'intermédiaire d'un arbre de transmission court **20** et d'un arbre de transmission long **22** s'étendant en partie à travers le carter **24** du moteur **12.** L'arbre de transmission long **22** comporte un demi arbre amont **22.1** entraîné par la boîte de transmission, lié par un joint homocinétique à un demi arbre aval **22.2** entraînant la roue **18.** Le demi-arbre amont **22.1** de l'arbre de transmission long **22** est guidé en rotation par l'intermédiaire d'un palier relais **26** qui est fixé à une paroi du carter **24** du moteur **12.**

Le palier **26** inclut un roulement **28** comportant une bague intérieure métallique **30** et une bague extérieure métallique **32** formant des chemins de roulement annulaires **34, 36,** sur lesquels circulent des corps roulants **38,** ici des billes, dont l'écartement est maintenu par une cage **40.** Des joints statiques ou dynamiques **42, 44** permettent de protéger des pollutions extérieures le volume annulaire entre les chemins de roulement **34, 36.**

La bague métallique extérieure **32** est surmoulée par un corps **46** en matière composite chargée formant une bride de fixation **47** du palier au carter **24.** Pour un bon maintien de la bague **32,** le corps **46** vient au contact des faces frontales planes **48, 50 et** de la face extérieure cylindrique **52** de la bague extérieure **32,** constituant ainsi un logement annulaire **53** pour la bague extérieure **32.** On peut prévoir avantageusement sur une ou plusieurs des faces de contact **48, 50, 52** de la bague **32** des reliefs **54** favorisant une accroche de la matière composite chargée lors de l'opération de surmoulage, par exemple des moletages ou rainurages.

la bride de fixation **47** comporte en outre une portée de centrage **56,** qui dans l'exemple est cylindrique, mais pourrait alternativement être tronconique. Cette portée cylindrique **56,** ici tournée radialement vers l'extérieur et coaxiale avec l'axe de rotation **100** du roulement, est constituée par une face extérieure d'un manchon métallique **58** surmoulé dans le corps **46** de la bride **47.** Le manchon **58** présente des formes favorisant une bonne accroche de la matière composite lors de l'opération de surmoulage, avec notamment une gorge annulaire **60** ouverte radialement vers l'intérieur et un embrèvement **62** permettant à une partie du corps surmoulé **46** d'être au contact d'une face du manchon **58** tournée radialement vers l'extérieur. Cet embrèvement **62** permet notamment de contrer les effets du rétreint radial de la matière composite à l'issue du surmoulage. On assure également par ces formes une bonne tenue dans le temps de la liaison mécanique, malgré les dilatations différentielles dues à la température ou à l'humidité.

La bride **47** comporte en outre des trous de passage **64** parallèle à l'axe de rotation du roulement, et délimités chacun par une douille **66,** de préférence métallique, surmoulée par le corps **46** en matière composite chargée.

A l'assemblage sur le véhicule, après emmanchement du palier **26** sur l'arbre **22.1,** on vient insérer la portée cylindrique **56** dans une ouverture cylindrique **68** du carter **24** par laquelle débouche l'arbre **22.1,** en positionnant les trous de passage **64** en face de trous filetés de fixation **70** prévus sur le carter, puis on engage des goujons filetés **72** dans ces trous pour fixer la bride **47** au carter **24.** Le corps **46** forme en outre un épaulement **74** qui vient en appui axial contre la paroi du carter sur le pourtour du logement cylindrique **68.** Les joints d'étanchéité **40, 42** assurent l'étanchéité entre l'intérieur de carter **24** et l'extérieur.

Suivant les besoins, un jeu fonctionnel radial peut être préservé entre le manchon métallique **58** et l'ouverture **68,** auquel cas le manchon **58** a uniquement une fonction de centrage, ou l'on peut au contraire prévoir une interférence entre les deux pièces, le manchon **58** étant alors fretté dans l'ouverture cylindrique **68.**

Dans une variante à manchon **56** et ouverture **68** tronconiques, on peut prévoir un angle inférieur à 5° pour favoriser un emmanchement serré.

D'autres variantes sont naturellement possibles.

## Revendications

1. Palier à roulement (26) comportant une bague métallique extérieure de roulement (32) définissant un axe de rotation (100), et une bride (47) pourvue d'un logement (53) pour la bague extérieure (32) et d'une portée cylindrique ou tronconique de centrage (56), **caractérisé en ce que** la bride (47) comporte un corps (46) en matière composite chargée surmoulé sur la bague extérieure (32) et sur un manchon métallique (58) formant la portée cylindrique ou tronconique (56).

2. Palier à roulement selon la revendication 1, **caractérisé en ce que** la portée cylindrique ou tronconique (56) est tournée radialement vers l'extérieur.

3. Palier à roulement selon l'une quelconque des revendications précédentes, **caractérisé en ce que** la portée cylindrique ou tronconique (56) est coaxiale avec l'axe de rotation (100).

4. Palier à roulement selon l'une quelconque des revendications précédentes, **caractérisé en ce que** la bague extérieure (32) comporte des reliefs d'accrochage (54) pour la matière composite surmoulée du corps (46) de la bride.

5. Palier à roulement selon l'une quelconque des revendications précédentes, **caractérisé en ce qu'**il comporte en outre une bague intérieure de roulement (30) et des corps roulants (38) logés entre la bague intérieure (30) et la bague extérieure (32).

6. Palier à roulement selon l'une quelconque des revendications précédentes, **caractérisé en ce que** la bride (47) comporte en outre au moins un trou de passage (64) d'une tige (72) de fixation à un support (24).

7. Palier à roulement selon la revendication 6, **caractérisé en ce que** le trou de passage (64) est délimité par une douille (66), de préférence métallique, surmoulée par le corps en matière composite chargée (46).

8. Palier à roulement selon l'une quelconque des revendications 6 ou 7, **caractérisé en ce que** le trou de passage (64) est parallèle à l'axe de rotation (100).

9. Dispositif comportant un support (24), notamment un carter de groupe motopropulseur, pourvu d'une ouverture cylindrique ou tronconique (68), et un palier à roulement (26) selon l'une quelconque des revendications précédentes pour guider un arbre (22.1) sortant par l'ouverture cylindrique ou tronconique (68), le manchon métallique (58) du palier à roulement étant engagé dans l'ouverture cylindrique ou tronconique (68).

10. Dispositif comportant un support (24), notamment un carter de groupe motopropulseur, pourvu d'une ouverture cylindrique ou tronconique (68) et d'un trou de fixation (70), un palier à roulement (26) selon l'une quelconque des revendications 6 à 8 pour guider un arbre (22.1) sortant par l'ouverture cylindrique ou tronconique (68), le manchon métallique (58) du palier à roulement étant engagé dans l'ouverture cylindrique ou tronconique (68), et au moins une tige de fixation (72) traversant le trou de passage (64) et engagée dans le trou de fixation (70).

11. Dispositif selon la revendication 9 ou la revendication 10, **caractérisé en ce que** le manchon métallique (56) est engagé en force dans l'ouverture cylindrique ou tronconique (68).

## Patentansprüche

1. Wälzlager (26), umfassend einen äußeren metallischen Laufring (32), der eine Rotationsasche (100) definiert, und einen mit einer Aufnahme (53) für den äußeren Ring (32) und einem zylindrischen oder kegelstumpfförmigen Zentriersitz (56) ausgestatteten Flansch (47), **dadurch gekennzeichnet, dass** der Flansch (47) einen auf den äußeren Ring (32) und auf eine Metallmanschette (58), die den zylindrischen oder kegelstumpfförmigen Sitz (56) bildet, hinterformten Körper (46) aus verstärktem Verbundmaterial aufweist.

2. Wälzlager nach Anspruch 1, **dadurch gekennzeichnet, dass** der zylindrische oder kegelstumpfförmige Sitz (56) radial nach außen zeigt.

3. Wälzlager nach einem der vorangehenden Ansprüche, **dadurch gekennzeichnet, dass** der zylindrische oder kegelstumpfförmige Sitz (56) mit der Rotationsachse (100) koaxial ist.

4. Wälzlager nach einem der vorangehenden Ansprüche, **dadurch gekennzeichnet, dass** der äußere Ring (32) Verhakungsreliefs (54) für das hinterformte Verbundmaterial des Körpers (46) des Flanschs aufweist.

5. Wälzlager nach einem der vorangehenden Ansprüche, **dadurch gekennzeichnet, dass** es ferner einen inneren Laufring (30) und Wälzkörper (38) aufweist, die zwischen dem inneren Ring (30) und dem äußeren Ring (32) angeordnet sind.

6. Wälzlager nach einem der vorangehenden Ansprüche, **dadurch gekennzeichnet, dass** der Flansch (47) ferner mindestens ein Durchgangsloch (64) eines Befestigungsstabs (72) auf einer Stütze (24) aufweist.

7. Wälzlager nach Anspruch 6, **dadurch gekennzeichnet, dass** das Durchgangsloch (64) von einer vorzugsweise metallischen Hülse (66) begrenzt ist, die mittels des Körpers aus verstärktem Verbundmaterial (46) hinterformt ist.

8. Wälzlager nach einem der Ansprüche 6 oder 7, **dadurch gekennzeichnet, dass** das Durchgangsloch (64) parallel zur Rotationsachse (100) ist.

9. Vorrichtung, aufweisend eine Stütze (24), insbesondere ein Gehäuse einer Motorantriebsgruppe, ausgestattet mit einer zylindrischen oder kegelstumpfförmigen Öffnung (68), und ein Wälzlager (26) nach einem der vorangehenden Ansprüche, um eine aus der zylindrischen oder kegelstumpfförmigen Öffnung (68) austretende Welle (22.1) zu führen, wobei die metallische Manschette (58) des Wälzlagers in die zylindrische oder kegelstumpfförmige Öffnung (68) eingreift.

10. Vorrichtung, aufweisend eine Stütze (24), insbesondere ein Gehäuse einer Motorantriebsgruppe, ausgestattet mit einer zylindrischen oder kegelstumpfförmigen Öffnung (68) und einem Befestigungsloch (70), ein Wälzlager (26) nach einem der Ansprüche 6 bis 8, um eine aus der zylindrischen oder kegelstumpfförmigen Öffnung (68) austretende Welle (22.1) zu führen (68), wobei die metallische Manschette (58) des Wälzlagers in die zylindrische oder kegelstumpfförmige Öffnung (68) eingreift, und mindestens eine das Durchgangsloch (64) durchquerende und in das Befestigungsloch (70) eingeführte Befestigungsstange (72).

11. Vorrichtung nach Anspruch 9 oder Anspruch 10, **dadurch gekennzeichnet, dass** die metallische Manschette (56) kraftschlüssig in die zylindrische oder kegelstumpfförmige Öffnung (68) eingepasst ist.

## Claims

1. A roller bearing (26) including an outer metal bearing ring (32) defining a rotation axis (100), and a flange (47) provided with a housing (53) for the outer ring (32) and a cylindrical or frustoconical centering seat (56), **characterized in that** the flange (47) includes a body (46) made from a filled composite material overmolded on the outer ring (32) and on a metal sleeve (58) forming the cylindrical or frustoconical seat (56).

2. The roller bearing according to claim 1, **characterized in that** the cylindrical or frustoconical seat (56) is turned radially outward.

3. The roller bearing according to any one of the preceding claims, **characterized in that** the cylindrical or frustoconical seat (56) is coaxial with the rotation axis (100).

4. The roller bearing according to any one of the preceding claims, **characterized in that** the outer ring (32) includes catching reliefs (54) for the overmolded composite material of the body (46) of the flange.

5. The roller bearing according to any one of the preceding claims, **characterized in that** it further includes an inner bearing ring (30) and rolling bodies (38) housed between the inner ring (30) and the outer ring (32).

6. The roller bearing according to any one of the preceding claims, **characterized in that** the flange (47) further includes at least one passage hole (64) for a rod (72) for fastening to a support (24).

7. The roller bearing according to claim 6, **characterized in that** the passage hole (64) is delimited by a bush (66), preferably made of metal, overmolded by the filled composite body (46).

8. The roller bearing according to any one of claims 6 or 7, **characterized in that** the passage hole (64) is parallel to the rotation axis (100).

9. A device including a support (24), in particular a powertrain case, provided with a cylindrical or frustoconical opening (68), and a roller bearing (26) according to any one of the preceding claims for guiding a shaft (22.1) exiting through the cylindrical or frustoconical opening (68), the metal sleeve (58) of the roller bearing being engaged in the cylindrical or frustoconical opening (68).

10. A device including a support (24), in particular a powertrain case, provided with a cylindrical or frustoconical opening (68) and a fastening hole (70), a roller bearing (26) according to any one of claims 6 to 8 to guide a shaft (22.1) exiting through the cylindrical or frustoconical opening (68), the metal sleeve (58) of the roller bearing being engaged in the cylindrical or frustoconical opening (68), and at least one fastening rod (72) crossing through the passage hole (64) and engaged in the fastening hole (70).

11. The device according to claim 9 or claim 10, **characterized in that** the metal sleeve (56) is forcibly engaged in the cylindrical or frustoconical opening (68).
